# EUROPEAN PATENT APPLICATION

(11) **EP 4 682 757 A1**
(43) Date of publication of application: **21.01.2026**
(21) Application number: 24770742.5
(22) Date of filing: 07.03.2024
(51) Int. Cl.: G06K 19/06, G06K 7/14

(54) **TWO-DIMENSIONAL CODE, TWO-DIMENSIONAL CODE READING DEVICE, AND TWO-DIMENSIONAL CODE READING METHOD**

(30) Priority: 13.03.2023 JP 2023038444; 17.03.2023 JP 2023042649
(71) Applicant: DENSO WAVE INCORPORATED, Agui-cho Chita-gun, Aichi 470-2297 (JP)
(72) Inventor: OZAWA, Ryo, Chita-gun, Aichi 470-2297 (JP); WATABE, Motoaki, Chita-gun, Aichi 470-2297 (JP)
(74) Representative: Kuhnen & Wacker Patent- und Rechtsanwaltsbüro PartG mbB
(86) International application number: PCT/JP2024/008910
(87) International publication number: WO 2024/190636

(57) **Abstract**

A two-dimensional code for reading a first piece of information and a second piece of information as an information pair includes: a first code region in which the first piece of information is recorded with a plurality of types of cells arranged two-dimensionally; and a second code region in which the second piece of information is recorded with a plurality of types of cells arranged two-dimensionally. The first code region is generated by using a rank that has been set according to a predefined setting rule related to predefined constituent element information, and the second code region is generated by using a rank that has been set according to the predefined setting rule related to the predefined constituent element information.

## Description

### Technical Field

The present disclosure relates to a two-dimensional code, a two-dimensional code reading device, and a two-dimensional code reading method.

### Background Art

Conventionally, two-dimensional codes based on various reading schemes have been developed for the purpose of improving convenience, such as larger capacity, smaller footprint, high-speed reading, and high-accuracy reading. For example, an encryption information code disclosed by PTL 1 below is generated such that encrypted information therein can be decrypted with a decryption key. The encrypted information is obtained by simultaneously reading the encryption information code and a two-dimensional code in which identification information associated with the decryption key is recorded.

### Citation List

### Patent Literature

PTL 1: JP 2016-015578 A

### Summary of the Invention

With such a configuration described above in which a pair of an encryption information code and a two-dimensional code for decryption is to be read, in a case where a plurality of pairs exist, two-dimensional codes of the plurality of pairs are sometimes captured simultaneously. In that case, unless the correspondence between each encryption information code and its two-dimensional code for decryption can be determined in the captured image, it is not possible to perform decryption processing appropriately. This applies not only to the above two-dimensional codes in which information is encrypted, but also to any two-dimensional codes in which respective pieces of information recorded in two code regions are to be read as an information pair.

Thus, for example, it may be contemplated to record predetermined common data or the like in each of code regions to be paired. In this case, two code regions to be treated as a pair can be identified from results of reading them. However, since each of the code regions is required to have the common data or the like recorded therein, an amount of information that can be recorded in each code region is reduced.

The present disclosure has been made to solve the above issues, and an object thereof is to provide a two-dimensional code, a two-dimensional code reading device, and a two-dimensional code reading method that make it possible to read respective pieces of information recorded in two code regions as an information pair without using information recorded in the respective code regions.

A two-dimensional code according to an embodiment of the present disclosure is
a two-dimensional code for reading a first piece of information and a second piece of information as an information pair, the two-dimensional code including: a first code region in which the first piece of information is recorded with a plurality of types of cells arranged two-dimensionally; and a second code region in which the second piece of information is recorded with a plurality of types of cells arranged two-dimensionally,
wherein the first code region is generated by using a rank that has been set according to a predefined setting rule related to predefined constituent element information, and
the second code region is generated by using a rank that has been set according to the predefined setting rule related to the predefined constituent element information.

A two-dimensional code reading device according to an embodiment of the present disclosure is
a two-dimensional code reading device that optically reads, as an information pair, a first piece of information and a second piece of information from a two-dimensional code including a first code region in which the first piece of information is recorded with a plurality of types of cells arranged two-dimensionally, and a second code region in which the second piece of information is recorded with a plurality of types of cells arranged two-dimensionally,
wherein the first code region is generated by using a rank that has been set according to a predefined setting rule related to predefined constituent element information,
the second code region is generated by using a rank that has been set according to the predefined setting rule related to the predefined constituent element information, and
the two-dimensional code reading device is configured to treat, as the information pair, the first piece of information and the second piece of information respectively read from the first code region and the second code region generated by using ranks that have been set according to the predefined setting rule related to the predefined constituent element information.

A two-dimensional code reading method according to an embodiment of the present disclosure is
a two-dimensional code reading method for optically reading, as an information pair, a first piece of information and a second piece of information by using a two-dimensional code reading device from a two-dimensional code including a first code region in which the first piece of information is recorded with a plurality of types of cells arranged two-dimensionally, and a second code region in which the second piece of information is recorded with a plurality of types of cells arranged two-dimensionally,
wherein the first code region is generated by using a rank that has been set according to a predefined setting rule related to predefined constituent element information, and
the second code region is generated by using a rank that has been set according to the predefined setting rule related to the predefined constituent element information,
the two-dimensional code reading method including:
   treating, as the information pair, the first piece of information and the second piece of information respectively read from the first code region and the second code region generated by using ranks that have been set according to the predefined setting rule related to the predefined constituent element information.

In the two-dimensional code according to an embodiment of the present disclosure, the first code region in which the first piece of information is recorded is generated by using a rank that has been set according to a predefined setting rule related to predefined constituent element information. The second code region in which the second piece of information is recorded is generated by using a rank that has been set according to the predefined setting rule related to the predefined constituent element information.

The two-dimensional code reading device that reads the first piece of information and the second piece of information from the first code region and the second code region compares the rank used for generating the first code region with the rank used for generating the second code region. These ranks are set according to the same predefined setting rule related to the predefined constituent element information. This allows the two-dimensional code reading device to determine whether to read the first piece of information and the second piece of information as an information pair even in a case where the first piece of information and the second piece of information do not include information indicating that they constitute the information pair. For example, both two code regions may be generated by using the same rank. In this case, it is possible to prevent mistaken recognition of respective pieces of information recorded in two code regions having different ranks as an information pair. Therefore, the two-dimensional code reading device can read the respective pieces of information recorded in the two code regions as an information pair without using information recorded in the respective code regions.

The two-dimensional code reading device according to an embodiment of the present disclosure has an advantageous effect similar to that of the two-dimensional code according to an embodiment of the present disclosure. The two-dimensional code reading method according to an embodiment of the present disclosure has an advantageous effect similar to that of the two-dimensional code according to an embodiment of the present disclosure.

### Brief Description of Drawings

FIG. 1 is an explanatory diagram illustrating a two-dimensional code according to a first embodiment.
FIG. 2 is a block diagram illustrating a functional configuration of a two-dimensional code reading device according to the first embodiment.
FIG. 3 is a flowchart illustrating a flow of two-dimensional code reading processing performed in the two-dimensional code reading device according to the first embodiment.
FIG. 4 is an explanatory diagram illustrating a two-dimensional code according to a modification example of the first embodiment.
FIG. 5 is an explanatory diagram illustrating an information code according to a second embodiment.
FIG. 6 is a diagram for explaining processing for obtaining a position of a code region 20 using second position information.
FIG. 7 is a diagram for explaining processing for obtaining a position of a code region 10 using first position information.
FIG. 8 is a block diagram illustrating a functional configuration of an information code reading device according to the second embodiment.
FIG. 9 is a flowchart illustrating a flow of information code reading processing performed in the information code reading device according to the second embodiment.
FIG. 10 is an explanatory diagram illustrating an information code according to a modification example of the second embodiment.
FIG. 11 is a hardware configuration diagram of a two-dimensional code reading device according to an embodiment of the present disclosure.

### Description of Embodiments

### <First Embodiment>

A two-dimensional code, a two-dimensional code reading device, and a two-dimensional code reading method according to a first embodiment of the present disclosure will be described below with reference to the drawings.

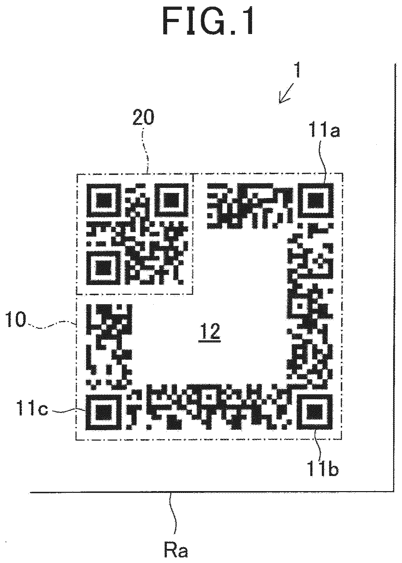

As illustrated in FIG. 1, a two-dimensional code 1 according to the present embodiment is a group code including two code regions, which are a code region 10 and a code region 20, disposed in a predetermined positional relationship. Each of the code region 10 and the code region 20 is a cell assembly in which a plurality of information display unit cells (hereinafter, also referred to simply as cells) are arranged two-dimensionally depending on information to be recorded. For example, the two-dimensional code 1 is displayed with the code region 10 and the code region 20 disposed in the same plane on a plain surface of a display medium Ra.

The code region 10 is a code region that is generated based on a first code reading scheme, whereby certain information (i.e., first piece of information) is recorded therein. The code region 10 of the present embodiment may be generated according to a method disclosed in, for example, JP 2014-139771 A, JP 2019-128677 A, or the like. As illustrated in FIG. 1, the code region 10 includes specific pattern regions 11a to 11c in each of which a specific pattern of a predetermined shape is disposed, a data recording region in which data is recorded with a plurality of types of cells, an error correction code recording region in which an error correction code is recorded with a plurality of types of cells, and a blank region 12 in which data recording with a plurality of types of cells is not performed.

The code region 20 is a code region that is generated based on a second code reading scheme, whereby certain information (i.e., second piece of information) is recorded therein. As illustrated in FIG. 1, the code region 20 of the present embodiment is generated as a QR code (registered trademark) with a small display area compared to the code region 10.

The two-dimensional code 1 according to the present embodiment is generated such that the first piece of information recorded in the code region 10 and the second piece of information recorded in the code region 20 are read as an information pair. Note that the code region 10 may correspond to an example of a first code region and the code region 20 may correspond to an example of a second code region.

Especially, the code region 10 and the code region 20 are generated by using ranks that are related to predefined constituent element information and are divergent from ranks most suitable for recording the first piece of information and the second piece of information. The divergent ranks are set according to a certain predetermined setting rule.

Particularly, as the predefined constituent element information, the number of cells that constitute a code region (hereinafter, also referred to as cell configuration) is adopted in the present embodiment. As the predefined setting rule, setting a cell configuration to a next larger version (i.e., rank) than a most suitable version (i.e., rank) is adopted.

Thus, for the code region 20, for example, in a case where the cell configuration that is most suitable for an information amount of the second piece of information (i.e., the smallest cell configuration that can record the above amount of the information) has 25*25 cells, a cell configuration having cells more by one level than those of the most suitable cell configuration (i.e., there is a margin for recording the above amount of the information) may be employed. For example, a cell configuration having 29*29 cells that is next larger than the cell configuration having 25*25 cells may be employed. In normal circumstances, the smallest cell configuration that can record an amount of information to be recorded is employed. Thus, even if there are a plurality of code regions in which the same second piece of information is recorded, the plurality of code regions can be differentiated from one another according to cell configuration.

In this case, for the code region 10, a cell configuration next larger than the smallest cell configuration that can record an amount of the first piece of information is employed, whereby the code region 10 have the same predefined setting rule as that adopted for the code region 20. Thus, the two-dimensional code reading device confirms that both of the cell configurations of the code region 10 and the code region 20 included in the same captured image are divergent from the normal cell configurations and next larger than the normal cell configurations as described above. This makes it possible to recognize that the respective pieces of information (i.e., first piece of information and second piece of information) read from the code region 10 and the code region 20 are to be treated as an information pair.

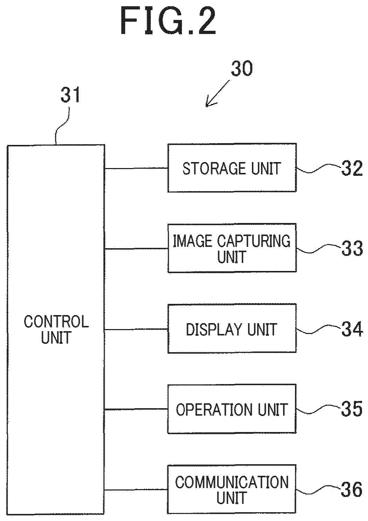

Next, a schematic configuration of a two-dimensional code reading device 30 that can optically read a two-dimensional code 1 generated as described above will be described with reference to FIG. 2.

The two-dimensional code reading device 30 may be, for example, a mobile terminal such as a smartphone having a camera function. The two-dimensional code reading device 30 has a certain application program (hereinafter, also referred to as reading application) installed therein for obtaining and outputting, as an information pair, pieces of information (i.e., first piece of information and second piece of information) that are read from a captured two-dimensional code 1.

As illustrated in FIG. 2, the two-dimensional code reading device 30 mainly includes a control unit 31, a storage unit 32, an image capturing unit 33, a display unit 34, an operation unit 35, and a communication unit 36. The image capturing unit 33 is, for example, a camera including a light-receiving sensor such as a complementary metal-oxide semiconductor (C-MOS) area sensor or a charge coupled device (CCD) area sensor. The display unit 34 is a display with a touch panel. The operation unit 35 outputs, to the control unit 31, signals corresponding to touch operations on the touch panel and operations on various operation keys. The communication unit 36 is a communication interface that can communicate with an external device such as a higher-level terminal (not illustrated) via a certain network such as the Internet.

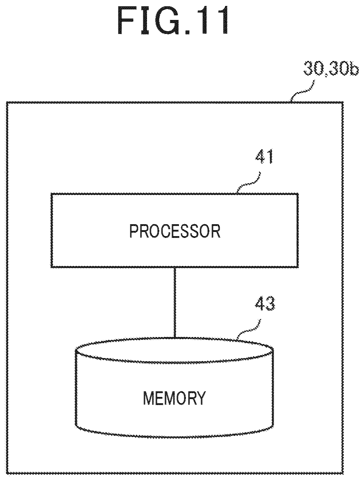

As illustrated in FIG. 11, the two-dimensional code reading device 30 includes a processor 41 and a memory 43 as a hardware configuration. For example, the processor 41 may be a central processing unit (CPU). The memory 43 may include a read only memory (ROM), a random-access memory (RAM), and/or a non-volatile memory. The memory 43 pre-stores programs related to processing of the two-dimensional code reading device 30. The functions of the control unit 31 and the storage unit 32 may be implemented with the above hardware configuration.

When the above reading application is activated, the control unit 31 performs two-dimensional code reading processing, whereby the two-dimensional code reading device 30 optically reads a two-dimensional code 1 captured by the image capturing unit 33.

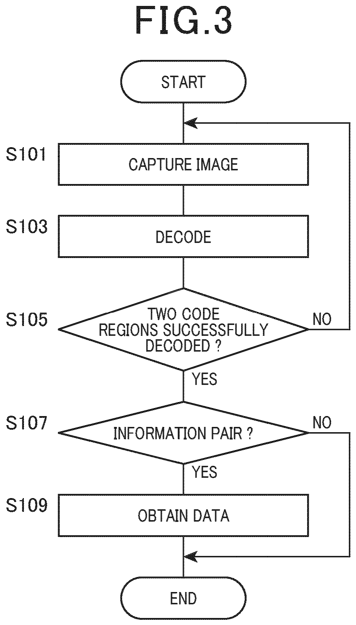

The two-dimensional code reading processing performed by the control unit 31 of the two-dimensional code reading device 30 for reading a two-dimensional code 1 generated as described above will be described in detail below with reference to the flowchart illustrated in FIG. 3.

When a user performs an operation or the like on the operation unit 35 to activate the above reading application, the control unit 31 starts the two-dimensional code reading processing. First, image capturing processing of step S101 in FIG. 3 is performed. In this processing, a captured image of information codes or the like captured by the image capturing unit 33 is imported and obtained. Subsequently, in decoding processing of step S103, processing for decoding and reading two code regions (i.e., information codes) included in the captured image is performed. Until they are successfully decoded, determination is 'No' in determination processing of step S105 and the above processing from step S101 to step S105 is repeated. For example, even in a case where one of the information codes is successfully decoded, the determination is 'No' in the determination processing of step S105 and the processing is repeated from step S101.

When the two code regions (i.e., information codes) included in the captured image are successfully decoded ('Yes' in S105), in determination processing of step S107, it is determined whether the pieces of information respectively read from the code regions are to be output as an information pair.

Here, a code region 10 and a code region 20 included in the same captured image have been successfully read. That is, the respective cell configurations of the code region 10 and the code region 20 are confirmed to be next larger than the normal cell configurations as described above. In this manner, the two read code regions are confirmed to have been generated by using versions (i.e., ranks) set according to the predefined setting rule. As a result, it is determined that the two pieces of read information (i.e., first piece of information and second piece of information) are to be output as an information pair ('Yes' in S107). Note that only one code region of the code region 10 and the code region 20 may include constituent element information (e.g., cell configuration) of the other code region. In this case, the one code region may be decoded to obtain the constituent element information of the other code region. Then, while the other code region is decoded, it may be determined whether constituent element information of the other code region matches constituent element information of the other code region obtained from the one code region.

In this case, data obtaining processing of step S109 is performed. The two pieces of read information (i.e., first piece of information and second piece of information) are obtained as an information pair to be output, and stored in the storage unit 32. Note that a plurality of information pairs that are obtained as described above may be transmitted together to the higher-level terminal via the communication unit 36 at a predefined timing. Alternatively, each of a plurality of obtained information pairs may be transmitted to the higher-level terminal via the communication unit 36 whenever it is obtained.

Meanwhile, since two information codes are purely captured and read, in some cases, it may be revealed that at least one of the cell configurations is not next larger than the normal cell configuration as described above. In this case, it is determined that the two pieces of read information are not to be output as an information pair ('No' in S107). Further, for example, also in a case where a code region 20 is replaced with another QR code, it may be revealed that the cell configuration of the replaced QR code is not next larger than the normal cell configuration as described above. Also in this case, it is determined that the two pieces of read information are not to be output as an information pair ('No' in S107). In this case, the two pieces of read information are not obtained and stored, and the two-dimensional code reading processing ends. Note that, in a case where it is determined that the two pieces of read information are not to be output as an information pair ('No' in S107), the processing from step S101 may be performed again.

As described above, in a two-dimensional code 1 according to the present embodiment, a code region 10 in which a first piece of information is recorded is generated by using a rank that has been set according to a predefined setting rule related to predefined constituent element information, and a code region 20 in which a second piece of information is recorded is generated by using a rank that has been set according to the predefined setting rule related to the predefined constituent element information. The ranks set according to the predefined setting rule are divergent from ranks most suitable for recording the first piece of information and the second piece of information.

The two-dimensional code reading device 30 that reads the first piece of information and the second piece of information from the code region 10 and the code region 20 checks the ranks that are related to the predefined constituent element information and are used for generating the code region 10 and the code region 20. This makes it possible to determine whether to read the first piece of information and the second piece of information as an information pair. Thus, it is possible to prevent mistakenly recognizing, as one of the information pair, a piece of information read from a code region generated by using a rank that is related to the predefined constituent element information and is most suitable for recording the read information (i.e., a two-dimensional code that tends to be generated by a typical generation method). Further, the ranks set according to the predefined setting rule may be the same between the code region 10 and the code region 20. This can prevent mistakenly recognizing, as an information pair, code regions that should not be read as an information pair even if the code regions that should not be read as an information pair have been generated by using ranks divergent from the most suitable ranks. This is because, in addition to the ranks used for generating the code region 10 and the code region 20 being set according to the predefined setting rule, the ranks are the same. Therefore, the respective pieces of information recorded in the code region 10 and the code region 20 can be read as an information pair without using information recorded in the code region 10 and the code region 20.

Especially, in the present embodiment, the number of cells that constitute a code region (i.e., cell configuration) is adopted as the predefined constituent element information. Thus, as in the above example, the predefined setting rule may include that the cell configuration is set to have more cells by one level than the cell configuration that is most suitable for the amount of information recorded in the code region. This makes it possible to easily and accurately determine whether a code region has been generated by using a cell configuration of a rank set according to the predefined setting rule.

Note that the predefined constituent element information adopted is not limited to the cell configuration, and other constituent element information that can be obtained at the time of decoding may be adopted. For example, a mask pattern for rearranging cells arranged depending on recorded information so as to disperse light cells and dark cells may be adopted as predefined constituent element information according to a first modification example of the present embodiment. In this case, for example, the predefined setting rule may include that the mask pattern is set to a second version (i.e., second rank) divergent from a first version (i.e., first rank) that is most suitable for dispersing the light cells and the dark cells that are arranged depending on the information recorded in the code region. As the second version, the second most suitable mask pattern after the first version may be set. In this case, a version (i.e., rank) of the mask pattern that is set according to the predefined setting rule is calculated after encoding processing for arranging the cells to record the read information is performed. The calculated version (i.e., rank) of the mask pattern is compared with the version (i.e., rank) of the mask pattern read from the code region by capturing it. This makes it possible to determine whether the code region has been generated by using a version (i.e., rank) set according to the predefined setting rule. In a case where each mask pattern has a unique mask number, for example, a mask number (i.e., rank) next to a mask number (i.e., rank) of the most suitable mask pattern may be set. That is, in a case where the predefined constituent element information is managed with element numbers, an element number divergent from (e.g., next element number in the sequence after) an element number (i.e., rank) that is most suitable for recorded information may be set.

Alternatively, a compression method for information recorded in a code region (hereinafter, also referred to simply as recorded information) may be adopted as predefined constituent element information according to a second modification example of the present embodiment. In this case, for example, the predefined setting rule may include that the compression method is set to a rank divergent from that of a compression method that can compress the recorded information most (e.g., that can minimize the information amount). Particularly, for example, in a case where the recorded information consists of only one type of characters, setting a rank of a compression method divergent from a compression method that is typically employed and is most suitable for the recorded information (i.e., recorded information consisting of only one type of characters) may be adopted as the predefined setting rule. For example, setting a rank of a compression method that is most suitable for recorded information consisting of a plurality of types of characters may be adopted as the predefined setting rule. Further, for example, in a case where the recorded information consists of a plurality of types of characters, setting a rank of a compression method divergent from a compression method that is typically employed and is most suitable for the recorded information (i.e., recorded information consisting of a plurality of types of characters) may be adopted as the predefined setting rule. For example, setting a rank of a compression method that is most suitable for recorded information consisting of only one type of characters may be adopted as the predefined setting rule. This makes it possible, by checking the compression method for the read information, to determine whether the code region has been generated by using a rank set according to the predefined setting rule. In other words, for example, the predefined setting rule may include that the compression method is set to a second rank divergent from a first rank of a compression method that is most suitable for compressing the information recorded in the code region (i.e., that exhibits maximum compression efficiency). As the second rank, the second most suitable compression method after the first rank may be set. In this case, the compression method for the read information is compared with the compression method of the rank set according to the predefined setting rule for the read information. This makes it possible to determine whether the code region has been generated by using a rank set according to the predefined setting rule.

Further, as a third modification example of the present embodiment, at least one of a code region 10 and a code region 20 may be generated as a partially non-public code including a public region and a non-public region. In the public region, information that does not require a decryption key is recorded. In the non-public region, encrypted information that requires a decryption key is recorded. As a method of generating such a partially non-public code and a specific configuration of a generated partially non-public code, for example, a technology disclosed in JP 2009-9547 A, JP 2008-299422 A, or the like can be preferably used.

According to this, a two-dimensional code reading device 30 having the decryption key and a two-dimensional code reading device 30 not having the decryption key may obtain different information pairs. For example, lot data of a product, to which a two-dimensional code 1 is attached, may be recorded in a public region of a first code region of the two code regions, and company-specific data related to the product may be recorded in a non-public region of the first code region. Product data of the product may be recorded in a second code region that is not generated as a partially non-public code. This allows a distributor or the like that does not use the decryption key to obtain the product data and the lot data as an information pair. On the other hand, a product manufacturer or the like that uses the decryption key can obtain the product data and the lot data and company-specific data as an information pair. In addition, a user or the like that uses a reading device capable of reading only the second code region that is not generated as a partially non-public code can obtain only the product data. In this manner, a range of information that is read from one two-dimensional code 1 can be separately set depending on reading device.

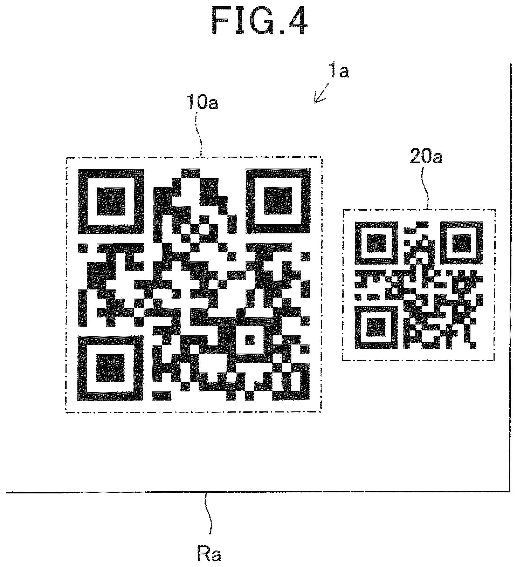

Note that the present disclosure is not limited to the above embodiment and the like and, for example, may be modified as follows.
(1) A first code reading scheme for generating and reading a code region 10 is not limited to the above-described reading scheme. As the first code reading scheme, a reading scheme for another type of code such as QR code, Data Matrix code, or MaxiCode may be employed. Similarly, a second code reading scheme for generating and reading a code region 20 is not limited to the reading scheme for QR codes. As the second code reading scheme, a reading scheme for another type of code such as Data Matrix code or MaxiCode may be employed.
   Further, for example, the same reading scheme may be employed for the first code reading scheme and the second code reading scheme. Particularly, for example, a two-dimensional code 1a illustrated as a modification example in FIG. 4 includes a code region 10a (i.e., first code region) that is a QR code and a code region 20a (i.e., second code region) that is a QR code. The code region 10a and the code region 20a may be QR codes having different code region sizes and different cell sizes.
(2) A code region 10 (or code region 10a) and a code region 20 (or code region 20a) may be disposed such that one code region having an error correction function is covered with the other code region to the extent that error correction is possible.

### <Second Embodiment>

Conventionally, information codes based on various reading schemes have been developed for the purpose of improving convenience, such as larger capacity, smaller footprint, high-speed reading, and high-accuracy reading. For example, an information code disclosed in JP 6465051 B includes: a first code region in which certain information is recorded with a plurality of types of cells arranged based on a first code reading scheme; and a second code region in which reading scheme information related to the first code reading scheme is recorded with a plurality of types of cells arranged based on a second code reading scheme. With this configuration, even a reading device in which a program corresponding to the first code reading scheme has not been installed can obtain the reading scheme information by reading the second code region. The program corresponding to the first code reading scheme is installed using the reading scheme information, thereby making it possible to read the information code of the first code reading scheme.

A typical reading device outputs a result of reading one information code to a higher-level device or the like every time the information code is successfully read. Meanwhile, a certain reading device reads a plurality of information codes all at once and outputs results of reading them together to a higher-level device or the like.

However, for example, in a case where two information codes to be grouped are read all at once in the latter reading device, while one information code is successfully read, the other information code may be unsuccessfully read. This is because constituent cell sizes of the information codes, sizes of the information codes themselves, and the like may be different. Until the other information code is successfully read, capturing and decoding may be repeated. As a result, there is a possibility that reading time becomes longer.

The present disclosure has been made to solve the above issues, and an object thereof is to provide an information code, an information code reading device, and an information code reading method that make it possible to reduce the time it takes to read an information code to be grouped.

An information code (1b, 1c) according to an embodiment of the present disclosure includes: a first code region (10b, 10c) in which a first piece of information is recorded with a plurality of types of cells arranged based on a first code reading scheme; and a second code region (20b, 20c) in which a second piece of information is recorded with a plurality of types of cells arranged based on a second code reading scheme. The first piece of information includes first information to be read, information indicating that the first code region is grouped with the second code region, and information indicating a position of the second code region, and the second piece of information includes second information to be read, information indicating that the second code region is grouped with the first code region, and information indicating a position of the first code region.

An information code reading device (30b) according to an embodiment of the present disclosure optically reads an information code (1b, 1c) including a first code region (10b, 10c) in which a first piece of information is recorded with a plurality of types of cells arranged based on a first code reading scheme, and a second code region (20b, 20c) in which a second piece of information is recorded with a plurality of types of cells arranged based on a second code reading scheme. The first piece of information includes first information to be read, information indicating that the first code region is grouped with the second code region, and information indicating a position of the second code region, and the second piece of information includes second information to be read, information indicating that the second code region is grouped with the first code region, and information indicating a position of the first code region. The information code reading device is configured to use, in a case where information recorded in one code region of the first code region and the second code region is read, the information recorded in the one code region to read information recorded in the other code region.

An information code reading method according to an embodiment of the present disclosure includes: by using an information reading device (30b), optically reading an information code (1b, 1c) including a first code region (10b, 10c) in which a first piece of information is recorded with a plurality of types of cells arranged based on a first code reading scheme, and a second code region (20b, 20c) in which a second piece of information is recorded with a plurality of types of cells arranged based on a second code reading scheme. The first piece of information includes first information to be read, information indicating that the first code region is grouped with the second code region, and information indicating a position of the second code region, and in the second piece of information, second information to be read, information indicating that the first code region is grouped with the first code region, and information indicating a position of the first code region are recorded. The information code reading method includes using, in a case where information recorded in one code region of the first code region and the second code region is read, the information recorded in the one code region to read information recorded in the other code region.

According to the information code according to an embodiment of the present disclosure, in the first code region generated based on the first code reading scheme, the first information to be read, the information indicating that the first code region is grouped with the second code region, and the information indicating the position of the second code region are recorded. In the second code region generated based on the second code reading scheme, the second information to be read, the information indicating that the second code region is grouped with the first code region, and the information indicating the position of the first code region are recorded.

This allows the information code reading device that captures the first code region and the second code region to recognize that the pieces of read information are to be grouped. In addition, the information code reading device can recognize the position of the other code region to be read next time by using the position information read from the one code region of the two code regions. For example, it is sometimes difficult to read the second code region because a cell size and a code region size of the second code region are smaller than those of the first code region. Even in this case, likelihood of successfully reading the second code region can be increased by using the position information on the second code region read from the first code region. Therefore, the time it takes to read an information code to be grouped can be reduced.

Further, in the first code region, the information indicating the position of the second code region with respect to the constituent cell size of the first code region is recorded. In the second code region, the information indicating the position of the first code region with respect to the constituent cell size of the second code region is recorded.

In this manner, based on the cell size of the one code region that has been read, the position of the other code region to be read next time can be recognized. By using the cell size that can be easily obtained from a captured image as a reference for determination, the position of the other code region can be accurately and easily recognized.

Alternatively, in the first code region, the information indicating the position of the second code region with respect to the size of the first code region is recorded. In the second code region, the information indicating the position of the first code region with respect to the size of the second code region is recorded.

In this manner, based on the size of the one code region that has been read, the position of the other code region to be read next time can be recognized. By using the code region size that can be easily obtained from a captured image as a reference for determination, the position of the other code region can be accurately and easily recognized.

The information code reading device according to an embodiment of the present disclosure achieves an advantageous effect similar to that of the information code according to an embodiment of the present disclosure.

The information code reading method according to an embodiment of the present disclosure achieves an advantageous effect similar to that of the information code according to an embodiment of the present disclosure.

An information code, an information code reading device, and an information code reading method according to a second embodiment of the present disclosure will be described below with reference to the drawings.

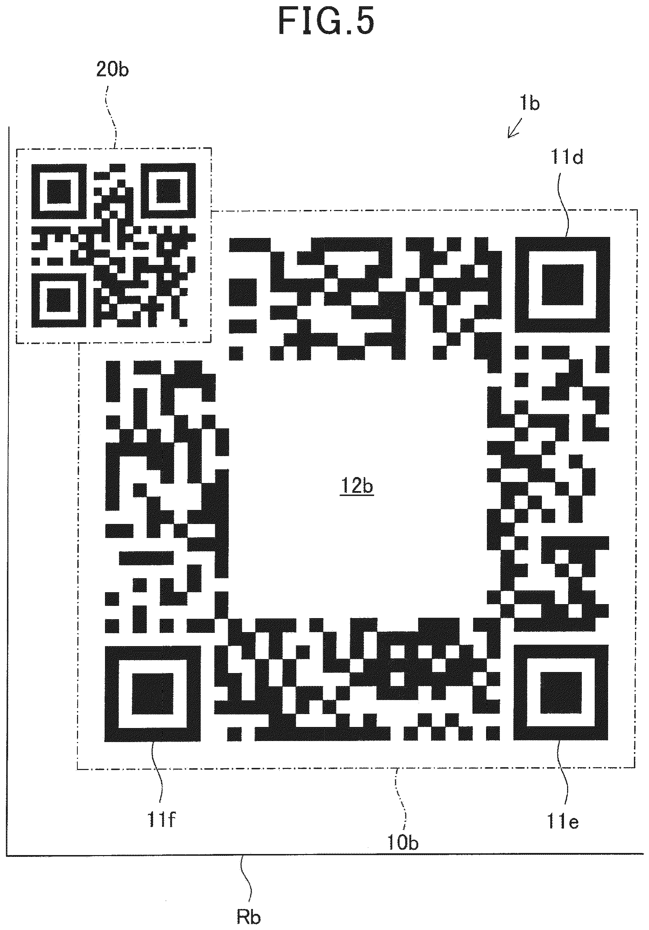

As illustrated in FIG. 5, an information code 1b according to the present embodiment is a group code including two code regions, which are a code region 10b and a code region 20b, disposed in a predetermined positional relationship. Each of the code region 10b and the code region 20b is a cell assembly in which a plurality of information display unit cells (hereinafter, also referred to simply as cells) are arranged depending on information to be recorded. For example, the information code 1b is displayed with the code region 10b and the code region 20b disposed in the same plane on a plain surface of a display medium Rb. Note that the code region 10b may correspond to an example of a first code region and the code region 20b may correspond to an example of a second code region.

The code region 10b is a code region that is generated based on the first code reading scheme, whereby certain information (i.e., first piece of information) is recorded therein. The code region 10b of the present embodiment may be generated according to a method disclosed in, for example, JP 2014-139771 A, JP 2019-128677 A, or the like. As illustrated in FIG. 5, the code region 10b includes specific pattern regions 11d to 11f in each of which a specific pattern of a predetermined shape is disposed, a data recording region in which data is recorded with a plurality of types of cells, an error correction code recording region in which an error correction code is recorded with a plurality of types of cells, and a blank region 12b in which data recording with a plurality of types of cells is not performed.

The code region 20b is a code region that is generated based on the second code reading scheme, whereby certain information (i.e., second piece of information) is recorded therein. As illustrated in FIG. 5, the code region 20b of the present embodiment is generated as a QR code with a code region size and a cell size smaller than those of the code region 10b.

The first information to be read recorded in the code region 10b and the second information to be read recorded in the code region 20b included in the information code 1b according to the present embodiment are grouped and output as reading results. To this end, in the code region 10b, in addition to the first information to be read, the information indicating that the code region 10b is grouped with the code region 20b is recorded. Similarly, in the code region 20b, in addition to the second information to be read, the information indicating that the code region 20b constitutes a group with the code region 10b is recorded. In the present embodiment, as the group information recorded in the code region 10b indicating that the code region 10b is grouped with the code region 20b, for example, a value calculated from the second information to be read by using a publicly known technique such as checksum may be employed. Similarly, as the group information recorded in the code region 20b indicating that the code region 20b is grouped with the code region 10b, for example, a value calculated from the first information to be read by using a publicly known technique such as checksum may be employed. Note that the information indicating that code regions are grouped may be, for example, a predetermined common value or the like.

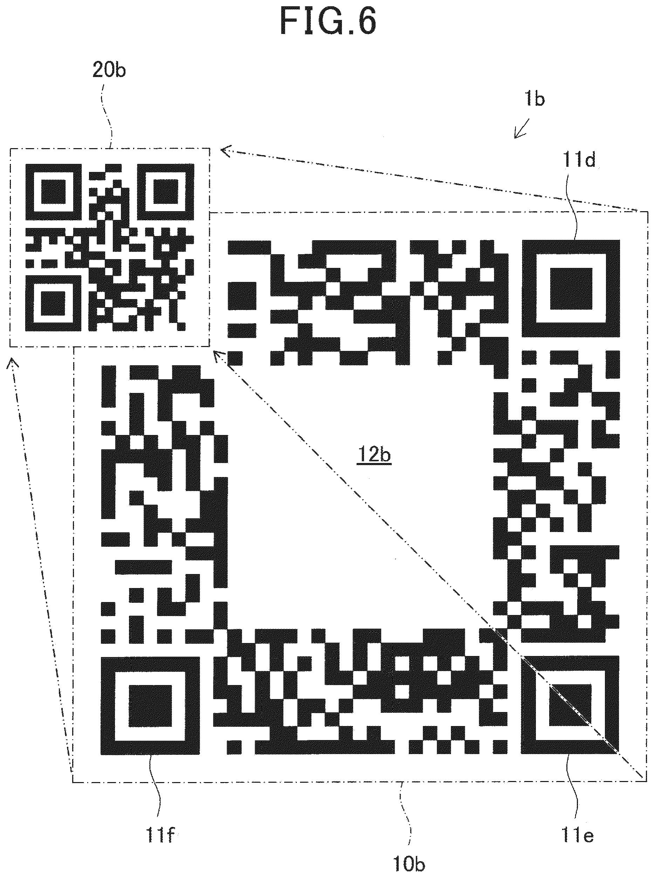

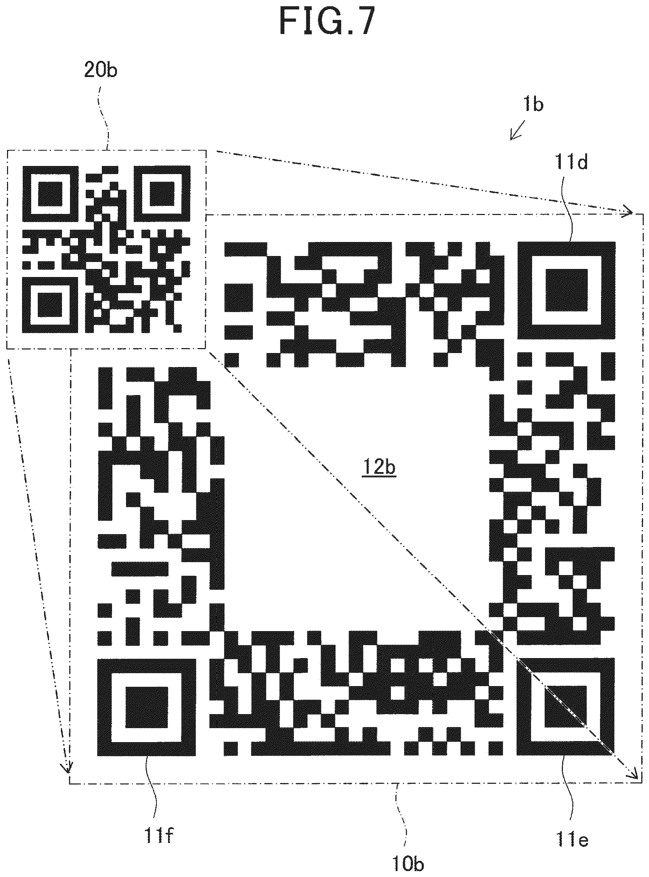

Especially, in the present embodiment, the information indicating the position of the code region 20b (hereinafter, also referred to as second position information) is further recorded in the code region 10b. The information indicating the position of the code region 10b (hereinafter, also referred to as first position information) is further recorded in the code region 20b. Particularly, the second position information is information with respect to the constituent cell size of the code region 10b. As illustrated in FIG. 6, for example, the second position information may be generated as information indicating distances from four corners (i.e., vertices) of the code region 20b to four corners of the code region 10b in cell units. Similarly, the first position information is information with respect to the constituent cell size of the code region 20b. As illustrated in FIG. 7, for example, the first position information may be generated as information indicating distances from four corners of the code region 10b to four corners of the code region 20b in cell units.

Each of the code region 10b and the code region 20b generated in this manner can also be read as an isolated information code. The code region 10b may correspond to an example of a first code and the code region 20b may correspond to an example of a second code.

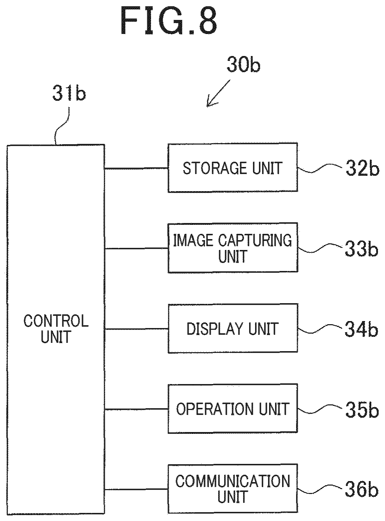

Next, a schematic configuration of an information code reading device 30b that can optically read an information code 1b generated as described above will be described with reference to FIG. 8.

The information code reading device 30b may be, for example, a mobile terminal such as a smartphone having a camera function. The information code reading device 30b has a certain application program (hereinafter, also referred to as reading application) installed therein for grouping (e.g., concatenating) and outputting pieces of information (i.e., first piece of information to be read and second piece of information to be read) read from a captured information code 1b.

As illustrated in FIG. 8, the information code reading device 30b mainly includes a control unit 31b, a storage unit 32b, an image capturing unit 33b, a display unit 34b, an operation unit 35b, and a communication unit 36b. The image capturing unit 33b is, for example, a camera including a light-receiving sensor such as a C-MOS area sensor or a CCD area sensor. The display unit 34b is a display with a touch panel. The operation unit 35b outputs, to the control unit 31b, signals corresponding to touch operations on the touch panel and operations on various operation keys. The communication unit 36b is a communication interface that can communicate with an external device such as a higher-level terminal (not illustrated) via a certain network such as the Internet.

As illustrated in FIG. 11, the information code reading device 30b includes a processor 41 and a memory 43 as a hardware configuration. For example, the processor 41 may be a CPU. The memory 43 may include a ROM, a RAM, and/or a non-volatile memory. The memory 43 pre-stores programs related to processing of the information code reading device 30b. The functions of the control unit 31b and the storage unit 32b may be implemented with the above hardware configuration.

When the above reading application is activated, the control unit 31b performs information code reading processing, whereby the information code reading device 30b optically reads an information code 1b captured by the image capturing unit 33b.

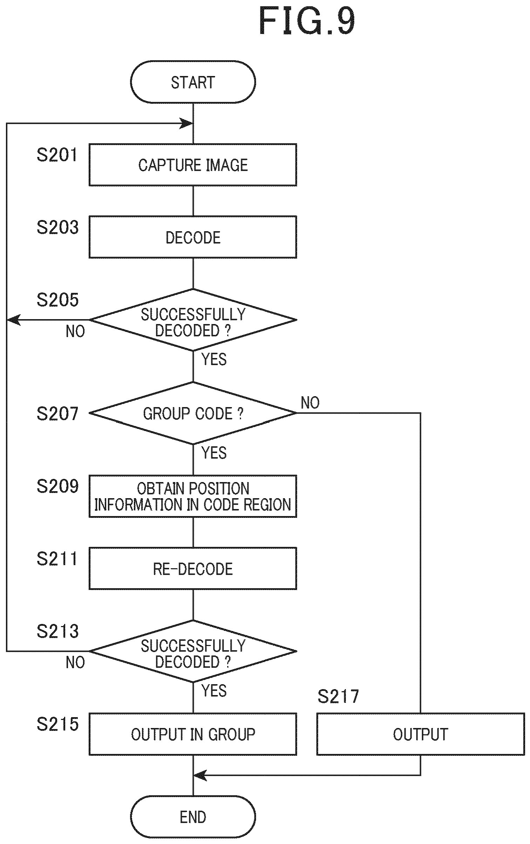

The information code reading processing performed by the control unit 31b of the information code reading device 30b for reading an information code 1b generated as described above will be described in detail below with reference to the flowchart illustrated in FIG. 9.

When a user performs an operation on the operation unit 35b to activate the above reading application or the like, the control unit 31b starts the information code reading processing. First, image capturing processing of step S201 in FIG. 9 is performed. In this processing, a captured image of an information code or the like captured by the image capturing unit 33b is imported and obtained. Subsequently, in decoding processing of step S203, processing for decoding and reading the information code included in the captured image is performed. Until it is successfully decoded, determination is 'No' in determination processing of step S205 and the above processing from step S201 to step S205 is repeated.

When the information code included in the captured image is successfully decoded ('Yes' in S205), in determination processing of step S207, it is determined whether the information code that has been successfully decoded is a part of a group code based on a result of decoding the information code. Here, in a case where the decoding result does not include the group information, it is determined that the information code that has been successfully decoded is not a part of a group code ('No' in S207). In this case, in output processing of step S217, the decoding result is output to the higher-level terminal or the like via the communication unit 36b.

On the other hand, in a case where the decoding result includes the group information, it is determined that the information code that has been successfully decoded is a part of a group code ('Yes' in S207). In this case, processing for obtaining position information in a code region of step S209 is performed.

For example, in a case where a code region 10b is successfully decoded first in the captured information code 1b, information of the position (e.g., positions of four corners) of a code region 20b with respect to the position of the code region 10b is obtained from the captured image based on second position information read from the code region 10b.

For example, in a case where the code region 20b is successfully decoded first in the captured information code 1b, information of the position (e.g., positions of four corners) of the code region 10b with respect to the position of the code region 20b is obtained from the captured image based on first position information read from the code region 20b.

After one code region of the code region 10b and the code region 20b is successfully decoded and position information of the other code region is read from the one code region as described above, re-decoding processing of step S211 is performed. In this processing, a range occupied by the other code region in the captured image in which the one code region has been successfully decoded as described above is calculated from the position information obtained as described above. Then, the processing for decoding the other code region is performed on the calculated range. Since the region to be re-decoded is calculated in this manner based on the obtained position information, it is possible to avoid information read from another nearby information code from being mistakenly grouped.

When the other code region in which group information is recorded is successfully decoded ('Yes' in S213), group output processing of step S215 is performed. In this processing, from the decoding result obtained in the decoding processing of step S203 and the decoding result obtained in the re-decoding processing of step S211, first information to be read and second information to be read are grouped and output to the higher-level terminal or the like via the communication unit 36b, excluding the first position information, the second position information, and the group information.

Meanwhile, for example, in a case where a part of an information code 1b is missing in a captured image, even when one code region is successfully decoded, a part of the other code region may not be included in the captured image. In this case, it is determined that re-decoding has failed ('No' in S213), and the processing returns to step S201 above. Also in a case where the re-decoding result does not include group information, it is determined that re-decoding has failed ('No' in S213), and the processing returns to step S201 above. Note that the user may be notified of the above re-decoding failure by using a display or the like on the display unit 34b that functions as a notification unit.

As described above, an information code 1b according to the present embodiment includes a code region 10b generated based on a first code reading scheme and a code region 20b generated based on a second code reading scheme. In the code region 10b, first information to be read, group information indicating that the code region 10b is grouped with the code region 20b, and information indicating a position of the code region 20b are recorded. In the code region 20b, second information to be read, group information indicating that the code region 20b is grouped with the code region 10b, and information indicating a position of the code region 10b are recorded.

This allows the information code reading device 30b that captures the first code region 10b and the second code region 20b to recognize that the pieces of read information are to be grouped. In addition, the information code reading device 30b can use the position information read from one code region of the two code regions to recognize the position of the other code region to be read next time. For example, it is sometimes difficult to read the code region 20b because the cell size and the code region size of the code region 20b are small. Even in this case, likelihood of successfully reading the code region 20b can be increased by using the position information on the code region 20b read from the code region 10b. Therefore, the time it takes to read an information code to be grouped can be reduced.

Especially, the information indicating the position of the code region 20b with respect to the constituent cell size of the code region 10b is recorded in the code region 10b. The information indicating the position of the code region 10b with respect to the constituent cell size of the code region 20b is recorded in the code region 20b.

In this manner, based on the cell size of the one code region that has been read, the position of the other code region to be read next time can be recognized. By using the cell size that can be easily obtained from a captured image as a reference for determination, the position of the other code region can be accurately and easily recognized.

Note that, the information indicating the position of the code region 20b with respect to the size of the code region 10b may be recorded in the code region 10b. The information indicating the position of the code region 10b with respect to the size of the code region 20b may be recorded in the code region 20b.

In this manner, based on the size of one code region that has been read, the position of the other code region to be read next time can be recognized. By using the code region size that can be easily obtained from a captured image as a reference for determination, the position of the other code region can be accurately and easily recognized.

Note that the present disclosure is not limited to the above embodiment and the like and, for example, may be modified as follows.

(1) A first code reading scheme for generating and reading a code region 10b is not limited to the above-described reading scheme. As the first code reading scheme, a reading scheme for another type of code such as QR code, Data Matrix code, MaxiCode, or bar code may be employed. Similarly, a second code reading scheme for generating and reading a code region 20b is not limited to the reading scheme for QR codes. As the second code reading scheme, a reading scheme for another type of code such as Data Matrix code, MaxiCode, or bar code may be employed.

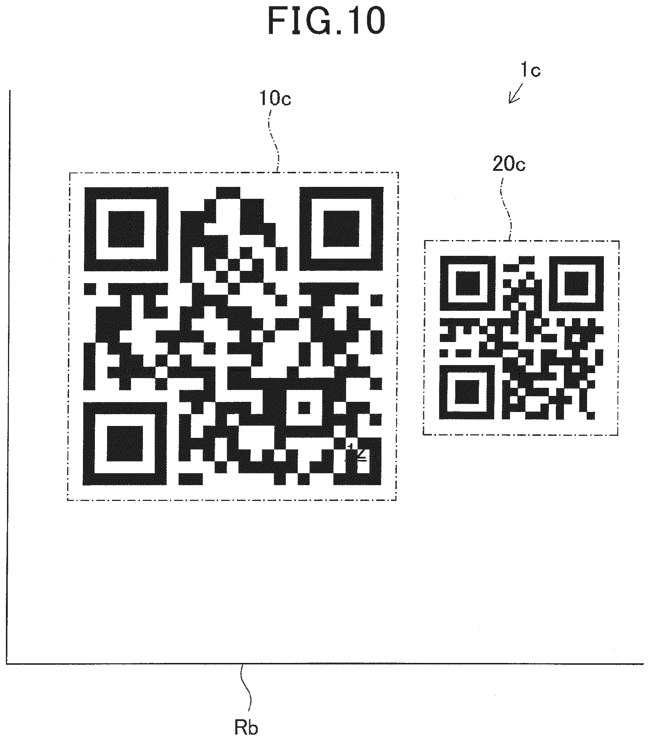

Further, for example, the same reading scheme may be employed for the first code reading scheme and the second code reading scheme. Particularly, for example, an information code 1c illustrated as a modification example in FIG. 10 includes a code region 10c (i.e., first code region) that is a QR code and a code region 20c (i.e., second code region) that is a QR code. The code region 10c and the code region 20c may be QR codes having different code region sizes and different cell sizes.

(2) A code region 10b may be generated as a partially non-public code including a public region and a non-public region. In the public region, information that does not require a decryption key is recorded. In the non-public region, encrypted information that requires a decryption key is recorded. For example, first position information and group information may be recorded in the non-public region and first information to be read may be recorded in the public region. Similarly, a code region 20b may be generated as a partially non-public code. For example, second position information and group information may be recorded in the non-public region and second information to be read may be recorded in the public region. With this configuration, which information is to be grouped becomes clear, and it is also possible to prevent the position information and the group information from being output in a reading device not having the decryption key. As a method of generating such a partially non-public code and a specific configuration of a generated partially non-public code, for example, a technology disclosed in JP 2009-9547 A, JP 2008-299422 A, or the like can be preferably used.

(3) A code region 10b (or code region 10c) and a code region 20b (or code region 20c) may be disposed such that one code region having an error correction function is covered with the other code region to the extent that error correction is possible.

## Claims

1. A two-dimensional code for reading a first piece of information and a second piece of information as an information pair, the two-dimensional code comprising: a first code region in which the first piece of information is recorded with a plurality of types of cells arranged two-dimensionally; and a second code region in which the second piece of information is recorded with a plurality of types of cells arranged two-dimensionally,
wherein the first code region is generated by using a rank that has been set according to a predefined setting rule related to predefined constituent element information, and
the second code region is generated by using a rank that has been set according to the predefined setting rule related to the predefined constituent element information.

2. The two-dimensional code according to claim 1,
wherein the predefined setting rule includes that a rank divergent from a rank that is most suitable for recorded information is set.

3. The two-dimensional code according to claim 1,
wherein the predefined constituent element information is a number of cells that constitute a code region.

4. The two-dimensional code according to claim 1,
wherein the predefined constituent element information is a mask pattern for rearranging cells arranged depending on recorded information so as to disperse light cells and dark cells.

5. The two-dimensional code according to claim 1,
wherein the predefined constituent element information is a compression method for recorded information.

6. A two-dimensional code reading device that optically reads, as an information pair, a first piece of information and a second piece of information from a two-dimensional code including a first code region in which the first piece of information is recorded with a plurality of types of cells arranged two-dimensionally, and a second code region in which the second piece of information is recorded with a plurality of types of cells arranged two-dimensionally,
wherein the first code region is generated by using a rank that has been set according to a predefined setting rule related to predefined constituent element information,
the second code region is generated by using a rank that has been set according to the predefined setting rule related to the predefined constituent element information, and
the two-dimensional code reading device is configured to treat, as the information pair, the first piece of information and the second piece of information respectively read from the first code region and the second code region generated by using ranks that have been set according to the predefined setting rule related to the predefined constituent element information.

7. A two-dimensional code reading method for optically reading, as an information pair, a first piece of information and a second piece of information by using a two-dimensional code reading device from a two-dimensional code including a first code region in which the first piece of information is recorded with a plurality of types of cells arranged two-dimensionally, and a second code region in which the second piece of information is recorded with a plurality of types of cells arranged two-dimensionally,
wherein the first code region is generated by using a rank that has been set according to a predefined setting rule related to predefined constituent element information, and
the second code region is generated by using a rank that has been set according to the predefined setting rule related to the predefined constituent element information,
the two-dimensional code reading method comprising:
treating, as the information pair, the first piece of information and the second piece of information respectively read from the first code region and the second code region generated by using ranks that have been set according to the predefined setting rule related to the predefined constituent element information.
